# FASCICULE DE BREVET EUROPEEN

(11) **EP 1 982 556 B1**
(45) Date de publication et mention de la délivrance du brevet: **30.12.2009**
(21) Numéro de dépôt: 07731588.5
(22) Date de dépôt: 08.02.2007
(51) Int. Cl.: H04W 72/08

(54) **COMMUNICATION ENTRE UN TERMINAL SANS FIL ET UN POINT D'ACCES D'UN RESEAU SANS FIL**
VERFAHREN ZUR KOMMUNIKATION ZWISCHEN EINEM DRAHTLOSEN ENDGERÄT UND ZUGANGSPUNKT EINES DRAHTLOSEN NETZWERKENDGERÄTS SOWIE ENTSPRECHENDES COMPUTERPROGRAMM
METHOD FOR COMMUNICATION BETWEEN A WIRELESS TERMINAL AND AN ACCESS POINT OF A WIRELESS NETWORK TERMINAL, AND ASSOCIATED COMPUTER PROGRAM

(30) Priorité: 10.02.2006 FR 0650482
(43) Date de publication de la demande: 22.10.2008
(73) Titulaire: FRANCE TELECOM, 75015 Paris (FR)
(72) Inventeur: VILLEFORCEIX, Bernadette, 78280 Guyancourt (FR)
(74) Mandataire: Cabinet Plasseraud
(86) Numéro de dépôt international: PCT/FR2007/050762
(87) Numéro de publication internationale: WO 2007/090994

(56) Documents cités:
- US-A1- 2003 112 744
- US-A1- 2005 099 975
- US-A1- 2005 195 744

## Description

La présente invention concerne les technologies d'accès sans fil à des réseaux de télécommunication. Elle s'applique notamment aux technologies de type IEEE 802.11 (Wi-Fi), de type IEEE 802.15. 1 (Bluetooth) ou encore IEEE 802.16 (WiMax) normalisées par l'Institute of Electrical and Electronics Engineers (IEEE).
De façon connue, des points d'accès sans fil procurent des liaisons radio avec des terminaux sans fil pour l'accès à des ressources accessibles depuis les points d'accès. A chaque point d'accès correspond une zone de couverture radio. Un terminal sans fil dans la zone de couverture d'un point d'accès est capable d'envoyer et de recevoir des données via ce point d'accès après avoir effectué avec succès certaines opérations pour sélectionner le point d'accès et se connecter au réseau par son intermédiaire.
La présente invention concerne plus particulièrement les aspects liés, en cas de mobilité du terminal sans fil, au changement de zone de couverture et du point d'accès sélectionné pour l'accès au réseau.

Dans certains types de réseaux, les points d'accès sont configurés, dans une phase préalable, pour pouvoir échanger selon un nombre fixé n de débits théoriques de transmission, les données avec les terminaux qui sont connectés au réseau. A chacun de ces débits théoriques correspond un mode de transmission déterminé, notamment une modulation et un codage spécifiques. A chaque débit théorique correspond une valeur seuil de niveau de réception. Si le niveau de champ reçu par le terminal utilisateur en provenance du point d'accès auquel il est associé est inférieur à la valeur seuil correspondant au débit considéré, ce débit, et plus généralement le mode de transmission correspondant à ce débit, ne peut être utilisé pour échanger les données entre le terminal et le point d'accès.

Les valeurs seuils de niveau de réception augmentent lorsque les valeurs de débits correspondants augmentent.

Dans l'art antérieur, lorsqu'un terminal mobile, par exemple à bord d'un train, cherche à se connecter au réseau via un nouveau point d'accès dans la zone de couverture Z duquel il vient d'entrer, il déclenche auprès du point d'accès les opérations pour l'accès au réseau une fois que le niveau de réception dépasse un certain seuil. Le seuil que le terminal considère d'abord est celui qui correspond au débit maximum considéré dans le point d'accès, soit le niveau de réception le plus exigeant.

Le document US2005/099975 A1 décrit que lors de l'établissement d'une communication, la qualité de la communication entre un terminal et un point d'accès est mesurée. Un tableau permet alors de déterminer le mode de communication qui sera utilisé. Le mode ayant le débit le plus élevé pour la qualité mesurée sera appliqué pour le début de la communication. Dans ce document, il y a toujours une comparaison avec un seuil afin de commencer la communication avec le débit le plus élevé possible.

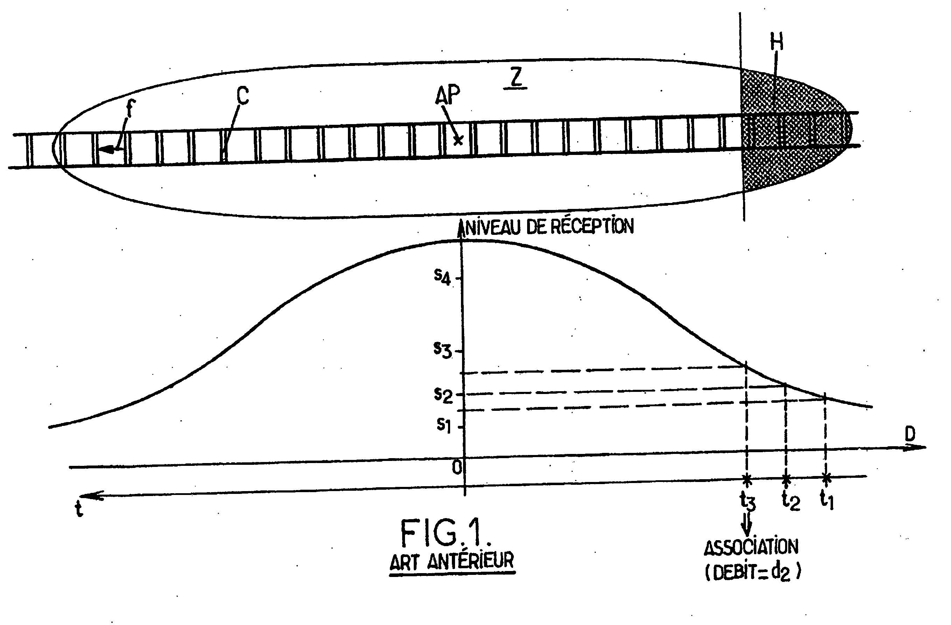

Sur la figure 1 est représentée la zone de couverture Z qui s'étire le long de la voie ferrée C. La flèche f indique le sens de progression du train. La figure 1 comporte en outre un graphe avec comme abscisse le temps t ou la distance D entre le nouveau point d'accès AP et le terminal dans le train. L'axe des ordonnées indique le niveau de champ reçu par le terminal utilisateur en provenance du nouveau point d'accès AP.

On considère ici que le nombre n de débits théoriques configurés dans les équipements est égal à 4. Les débits d1, d2, d3 et 4, avec d1<d2<d3<d4 sont associés aux valeurs seuils s1, s2, s3 et s4 avec s1<s2<s3<s4.

En référence à la figure 1, selon le fonctionnement de l'art antérieur, en entrant dans la zone de couverture Z du nouveau point d'accès AP, le terminal mesure d'abord, à un instant t1, le niveau de champ reçu en provenance du nouveau point d'accès AP et le compare à la valeur seuil maximale s4. Dans beaucoup de cas, cette condition n'est pas atteinte puisqu'on se trouve à l'entrée de la zone de couverture correspondant à ce nouveau point d'accès. Les étapes pour mettre en oeuvre la connexion au réseau via ce point d'accès n'ont donc pas lieu.

Une nouvelle tentative de connexion par le terminal à ce point d'accès AP a alors lieu à un instant t2 (t2>t1) pour le débit d3 juste inférieur au débit maximum d4 configuré dans le point d'accès. Le terminal mesure alors, à l'instant t2, le niveau de champ reçu en provenance du nouveau point d'accès AP et le compare à la valeur seuil s3 correspondant au débit d3. Dans ce cas, par exemple, la connexion ne peut avoir lieu car la valeur seuil s3 de niveau de réception n'est pas atteinte.

Alors une nouvelle tentative de connexion par le terminal à ce point d'accès a lieu à un instant t3 (t3>t2) pour le débit d2 juste inférieur au débit d3 précédemment considéré. Le terminal va alors mesurer, à l'instant t3, le niveau de champ reçu en provenance du nouveau point d'accès AP et le comparer à la valeur seuil s2 correspondant au débit d2. Dans ce cas, par exemple, la connexion via le nouveau point d'accès peut enfin être mise en oeuvre car la valeur seuil s2 de niveau de réception a été dépassée.

Toutefois, le train s'est rapproché du point d'accès entre l'instant t1 de la première tentative de connexion et l'instant t3 de la mise en oeuvre effective de la connexion. Le terminal ne se trouve effectivement connecté au nouveau point d'accès qu'à l'endroit où il se trouve à l'instant t3.

Dans le cas présent, la zone hachurée H ne peut donc donner lieu à une connexion au réseau par l'intermédiaire du point d'accès AP.

Ce fonctionnement actuel a donc pour conséquence de diminuer la zone de couverture efficace (c'est-à-dire la zone où des connexions au réseau par l'intermédiaire du point d'accès, depuis les terminaux sans fil ont effectivement lieu) d'un point d'accès pour des terminaux en situation de mobilité forte par rapport à des terminaux en situation plus statique. Et plus la vitesse de déplacement est importante, plus la zone de couverture efficace se trouve réduite.

La présente invention vise à proposer une solution pour augmenter'la zone de couverture d'un point d'accès d'un terminal sans fil mobile.

A cet effet, suivant un premier aspect, l'invention propose un procédé de communication entre un terminal sans fil et un point d'accès sans fil d'un réseau. Le terminal et le point d'accès sont configurés pour établir entre eux un canal radio de communication pour l'accès du terminal au réseau, selon au moins un premier mode correspondant à un premier débit théorique de transmission et un deuxième mode correspondant à un deuxième débit théorique de transmission supérieur au premier débit. Le premier débit est associé à une première valeur seuil et le deuxième débit est associé à une deuxième valeur seuil.

Le procédé comprend les étapes suivantes, lors d'une recherche par le terminal de connexion au réseau par l'intermédiaire du point d'accès :
a/ mesure par le terminal d'un premier niveau de réception du signal en provenance du point d'accès ;
b/ comparaison entre le premier niveau mesuré et la première valeur seuil, cette comparaison étant la première comparaison réalisée par le terminal en vue de décider de requérir l'accès au réseau via le point d'accès, entre une mesure de niveau de réception du signal en provenance du point d'accès et une valeur seuil associée à un débit de transmission ;
c/ si le premier niveau mesuré est supérieur à la première valeur seuil, envoi par le terminal au point d'accès d'une requête d'accès au réseau via le point d'accès ;
d/ si le point d'accès répond favorablement à la requête, établissement d'un canal radio de communication selon le premier mode entre le terminal et le point d'accès pour l'échange de données avec le réseau.

Selon l'invention, la recherche de la vérification des contraintes de réception ne débute pas par le seuil correspondant au débit théorique maximum, mais par un débit théorique inférieur. Ainsi, lors de l'entrée dans une zone de couverture, on cherche en priorité à se connecter à un débit théorique bas pouvant être mis en oeuvre sur le canal radio, avant de chercher à se connecter à des débits théoriques supérieurs. On compare donc en priorité le niveau de réception courant à une valeur seuil inférieure à celle associée au débit maximum.

La connexion au point d'accès a donc lieu à plus grande distance du point d'accès que dans l'art antérieur. La partie de la zone de couverture dans laquelle une connexion peut effectivement avoir lieu est donc plus grande.

Dans un mode de réalisation de l'invention, le terminal et le point d'accès sont configurés pour communiquer selon une pluralité de modes, chaque mode correspondant à un débit de transmission et une valeur seuil de niveau de réception par le terminal, le débit étant une fonction croissante du seuil de réception. Dans ce mode de réalisation, la première valeur seuil considérée est la valeur seuil minimale parmi les valeurs seuils de la pluralité de modes. Cette disposition a pour conséquence de permettre une connexion du terminal sans fil au réseau par l'intermédiaire du point d'accès dès que la condition de niveau de réception la moins contraignante est atteinte. Elle permet donc d'étendre au maximum la zone de couverture pour un terminal cherchant à se connecter par l'intermédiaire du point d'accès correspondant à la zone de couverture.
Dans d'autres modes de réalisation, la première valeur seuil que l'on considère est la valeur seuil, parmi les valeurs seuils configurées, immédiatement inférieure au niveau de réception mesuré à l'étape a). Dans ce cas, les débits mis en oeuvre à chaque instant de mesure sont les débits maximum théoriques qui peuvent être mis en place pour les niveaux de réception mesurés. L'algorithme nécessaire pour un tel fonctionnement est cependant plus compliqué que dans le cas où on établit d'abord systématiquement le canal avec un débit théorique minimum.

Avantageusement, le procédé selon l'invention met en oeuvre ensuite les étapes suivantes mises en oeuvre après l'étape d/ :
e/ mesure par le terminal d'un deuxième niveau de réception du signal en provenance du point d'accès ;
f/ si ledit deuxième niveau mesuré est supérieur à la deuxième valeur seuil associée au deuxième débit, mise en oeuvre du deuxième mode dans le canal de communication établi entre le terminal et le point d'accès.

Avantageusement, le terminal et le point d'accès sont configurés pour communiquer selon une pluralité de modes, chaque mode correspondant à un débit de transmission et une valeur seuil associée, le débit étant une fonction croissante de la valeur seuil et on réitère les étapes e/ et f/ du procédé en considérant dans un ordre croissant des valeurs seuils successives supérieures à la deuxième valeur seuil, pour établir successivement dans le canal de communication, des débits correspondant audites valeurs seuils.

Ces dispositions permettent d'augmenter dynamiquement le débit dans le canal de communication au fur et à mesure que le niveau de champ augmente lorsque que le terminal se rapproche du point d'accès.

Dans des modes de réalisation, une fois le canal radio de communication établi entre le terminal utilisateur et le point d'accès avec le deuxième débit théorique, un processus d'augmentation dynamique du débit dans le canal est mis en oeuvre pour établir successivement (selon un ordre croissant des débits) en oeuvre dans le canal des débits théoriques supérieurs au deuxième débit, si de tels débits sont configurés dans le terminal et le point d'accès en tant que débits théoriques utilisables.
Suivant un deuxième aspect, l'invention propose un terminal sans fil configuré pour établir, selon au moins un premier mode correspondant à un premier débit de transmission associé à une première valeur seuil et un deuxième mode correspondant à un deuxième débit de transmission supérieur au premier débit et associé à une deuxième valeur seuil, un canal radio de communication avec un point d'accès sans fil d'un réseau, pour l'accès du terminal au réseau, ledit terminal comprenant :
- des moyens pour mesurer un premier niveau de réception du signal en provenance du point d'accès ;
- des moyens pour comparer ce premier niveau mesuré et la première valeur seuil, cette comparaison étant la première comparaison réalisée par le terminal en vue de décider de requérir l'accès au réseau via le point d'accès, entre une mesure de niveau de réception du signal en provenance du point d'accès et une valeur seuil associée à un débit de transmission ;
- des moyens pour, si le premier niveau mesuré est supérieur à la première valeur seuil, envoyer au point d'accès une requête d'accès au réseau via ledit point d'accès ;
- des moyens pour, suite à la réception d'une réponse positive du point d'accès pour l'accès au réseau, établir un canal radio de communication selon le premier mode entre le terminal et le point d'accès pour l'échange de données avec le réseau.

Suivant un troisième aspect, l'invention propose un programme d'ordinateur à installer dans un terminal sans fil. Le terminal est configuré pour établir, selon au moins un premier mode correspondant à un premier débit de transmission associé à une première valeur seuil et un deuxième mode correspondant à un deuxième débit de transmission supérieur au premier débit et associé à une deuxième valeur seuil, avec un point d'accès sans fil d'un réseau, un canal radio de communication, pour l'accès du terminal au réseau.

Le programme comprend des instructions pour mettre en oeuvre les étapes suivantes lors d'une exécution du programme par des moyens de traitement du terminal :
- mesure d'un premier niveau de réception du signal en provenance du point d'accès ;
- comparaison entre ce premier niveau mesuré et la première valeur seuil, cette comparaison étant la première comparaison réalisée par le terminal en vue de décider de requérir l'accès au réseau via le point d'accès, entre une mesure de niveau de réception du signal en provenance du point d'accès et une valeur seuil associée à un débit de transmission ;
- si le premier niveau mesuré est supérieur à la première valeur seuil, envoi au point d'accès d'une requête d'accès au réseau via le point d'accès ;
- si le point d'accès répond favorablement à la requête, établissement d'un canal radio de communication selon le premier mode entre le terminal et le point d'accès pour l'échange de données avec le réseau.

Dans un mode de réalisation, les valeurs seuils associées aux débits théoriques respectifs sont configurables. Par exemple, une valeur seuil peut être modifiée, suite à l'obtention de résultats de simulation ou d'expérimentation.

D'autres caractéristiques et avantages de l'invention apparaîtront encore à la lecture de la description qui va suivre. Celle-ci est purement illustrative et doit être lue en regard des dessins annexés sur lesquels :
- la figure 2 est un schéma synoptique d'un réseau sans fil dans lequel l'invention est mise en oeuvre ;
- la figure 3 représente une zone de couverture d'un point d'accès et un graphe indiquant le niveau de champ reçu par le terminal sans fil en provenance du point d'accès, en fonction du temps ou de la distance entre le point d'accès et le terminal.

L'invention est décrite ci-après dans son application particulière à un réseau sans fil de type IEEE 802.11.

Le réseau IEEE 802.11 schématisé sur la figure 1 a été déployé le long d'une voie ferrée. Il comporte un certain nombre de points d'accès sans fil au réseau AP1, AP2, AP3, munis d'antennes d'émission/réception et associés chacun à une zone de couverture radio. Deux zones de couvertures successives ont une partie de recouvrement. Dans l'exemple représenté, ces points d'accès sont reliés à un réseau de type IP 4 qui peut être l'internet.

Dans chaque point d'accès, des circuits assurent l'interface avec la partie filaire du réseau 4; tandis que des circuits radio coopérant avec l'antenne du point d'accès sont en charge de l'émission et de la réception des signaux sur l'interface sans fil. Entre ces deux types de circuits, les protocoles de la norme IEEE 802.11, qui concernent les deux premières couches, PHY et MAC, du modèle OSI) permettent aux terminaux d'accéder au réseau sans fil. Les antennes des points d'accès ont des ouvertures angulaires réduites pour privilégier un gain maximum dans la direction de l'axe de déplacement des trains circulant sur la voie ferrée.

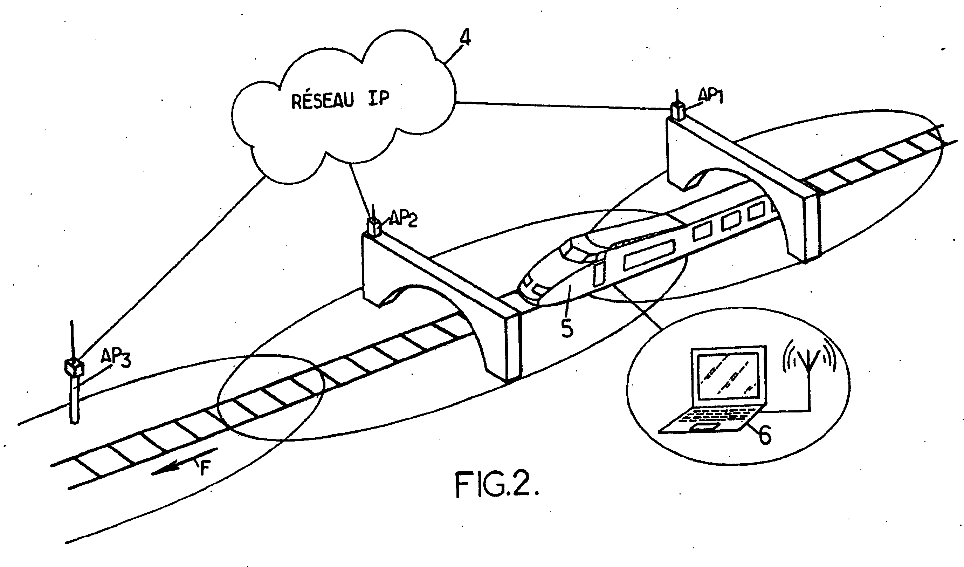

En référence à la figure 2, un train 5 circule sur la voie ferrée dans le sens indiqué par la flèche F. A bord du train se trouve un terminal utilisateur sans fil 6, par exemple un ordinateur portable muni d'une interface sans fil de type IEEE 802.11.

Le terminal 6 et les points d'accès AP1, AP2 et AP3 sont adaptés pour émettre et recevoir selon quatre modes de communication différents, des données destinées au réseau ou en provenance du réseau 4, sur un canal radio de communication de données établi entre le terminal 6 et le point d'accès pour l'accès aux ressources du réseau IP 4.

Le terminal sans fil 6 comporte en outre un décodeur adapté pour mesurer le niveau de réception d'un signal reçu, sous la forme par exemple d'un rapport signal à bruit S/N.

Le premier mode M1 correspond à un débit théorique D1 de 1 Mégabits par seconde (Mb/s) et à une modulation de type DBPSK (« Differential Binary Phase Shift Keying »). Le mode M1 ne peut être mis en oeuvre entre le terminal 6 et le point d'accès par lequel le terminal a accès au réseau 4, que lorsque le niveau de signal reçu par le terminal sans fil 6 en provenance de ce point d'accès et mesurée par le décodeur du terminal est supérieur à la valeur seuil S1 égale à - 94 dBm.

Le deuxième mode M2 correspond à un débit théorique D2 de 2 Mb/s et à une modulation de type DBPSK (« Differential Binary Phase Shift Keying »). Le mode M2 ne peut être mis en oeuvre entre le terminal sans fil 6 et le point d'accès par lequel le terminal a accès au réseau 4, que lorsque le niveau de signal reçu par le terminal 6 en provenance de ce point d'accès est supérieur à la valeur seuil S2 égale à - 91 dBm.

Le troisième mode M3 correspond à un débit théorique D3 de 5,5 Mb/s et à une modulation de type CCK (« Complementary Code Keying »). Le mode M3 ne peut être mis en oeuvre entre le terminal sans fil 6 et le point d'accès par lequel le terminal a accès au réseau 4, que lorsque le niveau de signal reçu par le terminal sans fil 6 en provenance de ce point d'accès est supérieur à la valeur seuil S3 égale à - 89 dBm.

Le quatrième mode M4 correspond à un débit théorique D4 de 11 Mb/s et à une modulation de type CCK (« Complementary Code Keying »). Le mode M4 ne peut être mis en oeuvre entre le terminal sans fil 6 et le point d'accès par lequel le terminal a accès au réseau 4, que lorsque le niveau de signal reçu par le terminal sans fil 6 en provenance de ce point d'accès est supérieur à la valeur seuil S4 égale à - 85 dBm.

Dans le cas notamment des technologies de type IEEE 802.11, les opérations nécessaires pour qu'un terminal utilisateur sans fil puisse se connecter au réseau par l'intermédiaire d'un point d'accès sélectionné comportent, outre les étapes d'authentification qui ne sont pas décrites ci-dessous, les étapes d'association ou de réassociation.

Dans une phase de découverte des points d'accès, le terminal écoute la voie radio pour rechercher des trames spécifiques appelées balises ("Beacon"). Le terminal examine les informations contenues dans ce type de trame en particulier le nom de réseau (SSID, "Service Set Identifier") et les paramètres propres au réseau sans fil déployé. Ensuite, le terminal envoie des trames de recherche de points d'accès ("Probe Request") contenant le nom de réseau (SSID) recherché. Le ou les point(s) d'accès concemé(s) répond(ent) à la requête en renvoyant une trame "Probe Response" signalant leur présence. En fonction des éléments ainsi découverts, le terminal sélectionne le point d'accès voulu et demande à s'associer auprès du point d'accès. Pour ce faire, il émet à destination du point d'accès sélectionné une demande d'association (« Association Request »). Si l'association réussit, c'est-à-dire si le point d'accès répond favorablement (« Association Response » contenant le champ « successful »), un canal de communication de données est établi entre le terminal et le point d'accès, sur lequel le terminal est capable d'échanger des données avec le réseau IP 4 via le point d'accès auquel il est connecté.

L'ensemble des échanges entre le point d'accès et le terminal antérieurs à l'établissement du canal de communication de données sont des échanges de signalisation.

Le procédé de réassociation, pour les aspects qui nous intéressent dans le cadre de l'invention, est similaire au procédé d'association si ce n'est que le terminal est déjà associé à un premier point d'accès lorsqu'il réalise ce procédé de réassociation à un deuxième point d'accès. Le procédé de réassociation a pour conséquence, si la réassociation est réussie, de transférer l'association du premier point d'accès au deuxième point d'accès.

Dans ce cas, le terminal émet à destination du deuxième point d'accès sélectionné une demande de réassociation (« Reassociation Request »). Si l'association réussit, c'est-à-dire si le deuxième point d'accès répond favorablement (« Reassociation Response » contenant le champ « successful »), un canal de communication de données est établi entre le terminal et le deuxième point d'accès pour l'accès au réseau IP 4, et le terminal est capable d'envoyer et de recevoir des données exclusivement via le deuxième point d'accès auquel il est connecté.

En référence à la figure 2, le terminal 6, qui se situe alors dans la zone de couverture du point d'accès AP1, est associé au point d'accès sans fil AP1 qui lui donne accès aux services du réseau IP 4. Au cours de la progression du train 5 le long de la voie ferrée selon la flèche F, l'ordinateur 6 entre dans la zone de couverture du point d'accès AP2.

En fonction notamment des niveaux de réception des signaux émis respectivement par les points d'accès AP1 et AP2, l'ordinateur 6 décide de demander à être associé au point d'accès AP2.

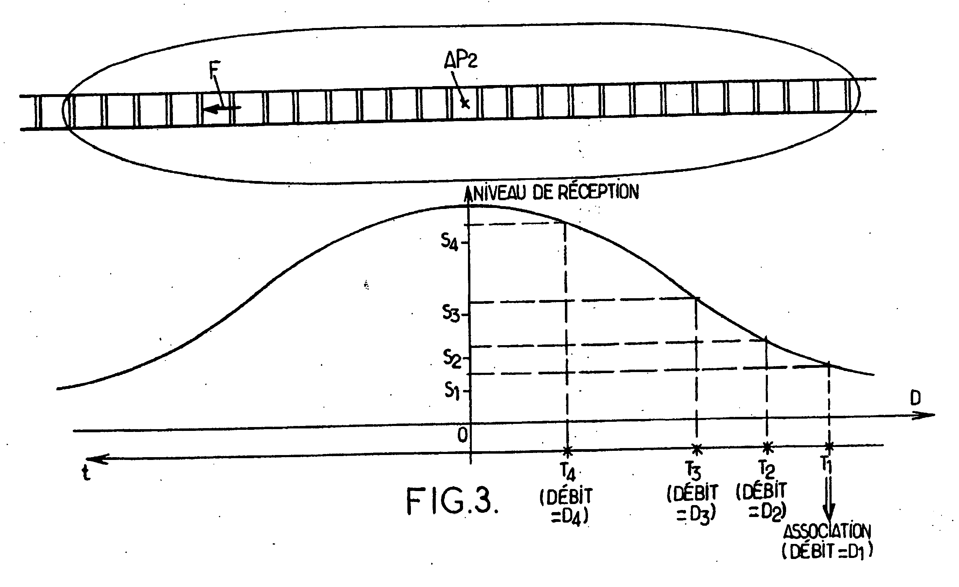

Sur la figure 3 est représentée la zone de couverture du point d'accès AP2, la voie ferrée empruntée par le train, et un graphe indiquant, en ordonnée, le niveau de champ provenant du point d'accès AP2 et reçu par le terminal utilisateur en fonction de la distance séparant ce dernier du point d'accès AP2 et en fonction du temps représentés en abscisse.

Dans le mode de réalisation de l'invention considéré, le terminal sans fil 6 mesure à un instant T1 le niveau de réception du signal en provenance du point d'accès AP2. Puis il compare ce niveau mesuré d'abord à la valeur seuil minimale S1 parmi les valeurs seuils associées aux différents modes qui peuvent être mis en oeuvre entre le point d'accès AP2 et le terminal sans fil 6. Cette valeur seuil minimale S1 correspond au débit minimum D1 égal à 1 Mb/s.

Si le niveau mesuré est supérieur à la valeur S1, alors le terminal sans fil 6 émet à destination du point d'accès AP2 une requête de réassociation.

Si l'association réussit, c'est-à-dire si le point d'accès AP2 répond favorablement (« Reassociation Response » contenant le champ « successful »), un canal de communication de données conforme au premier mode de communication M1 est établi entre le terminal et le point d'accès PA2. Le terminal 6 est alors capable d'envoyer et de recevoir des données exclusivement via le point d'accès PA 2 auquel il est connecté, à un débit de 1 Mb/s.

Le fait de comparer d'abord le niveau de réception à la valeur seuil S1 et de requérir l'association dès que ce niveau est supérieur à S1 permet d'être connecté dès cet instant T1, et non plus à un instant ultérieur selon l'art antérieur, après avoir procédé d'abord aux comparaisons avec S4, puis avec S3 etc.

Ensuite, le terminal sans fil 6 mesure à nouveau, à un instant T2 (T2 > T1), le niveau de réception du signal en provenance du point d'accès AP2. Puis il compare ce niveau mesuré à la valeur seuil S2, immédiatement supérieure à la valeur S1 parmi les valeurs seuils associées aux différents modes de communication M1, M2, M3 et M4. Cette valeur seuil S2 correspond au débit D2 égal à 2 Mb/s.

Si le niveau mesuré est supérieur à la valeur S2, alors le mode de communication mis en oeuvre par le terminal et le point d'accès AP2 sur le canal de communication devient le deuxième mode M2, avec notamment un débit de 2 Mb/s. Sinon le débit du canal de communication reste égal à D1 jusqu'à ce qu'une mesure ultérieure du niveau de champ reçu en provenance du point d'accès AP2 indique une valeur supérieure au seuil S2.

Ensuite, le terminal sans fil 6 mesure à nouveau, à un instant T3 (T3 > T2), le niveau de réception du signal en provenance du point d'accès AP2. Puis il compare ce niveau mesuré à la valeur seuil S3, immédiatement supérieure à la valeur S2 parmi les valeurs seuils associées aux différents modes de communication M1, M2, M3 et M4. Cette valeur seuil S3 correspond au débit D3 égal à 5,5 Mb/s.

Si le niveau mesuré est supérieur à la valeur S3, alors le mode de communication mis en oeuvre sur le canal de communication devient le troisième mode M3, avec notamment un débit de 5,5 Mb/s. Sinon le débit du canal de communication reste égal à D2 jusqu'à ce qu'une mesure ultérieure du niveau de champ reçu en provenance du point d'accès AP2 indique une valeur supérieure au seuil S3.

Puis, le terminal sans fil 6 mesure à nouveau, à un instant T4 (T4 > T3), le niveau de réception du signal en provenance du point d'accès AP2. Puis il compare ce niveau mesuré à la valeur seuil S4, valeur maximale parmi les valeurs seuils associées aux différents modes de communication M1, M2, M3 et M4. Cette valeur seuil S4 correspond au débit maximum D4 égal à 11 Mb/s.

Si le niveau mesuré est supérieur à la valeur S4, alors le mode de communication mis en oeuvre sur le canal de communication devient le quatrième mode M4, avec notamment un débit égal au débit D4 de 11 Mb/s. Sinon le débit du canal de communication reste égal à D3 jusqu'à ce qu'une mesure ultérieure du niveau de champ reçu en provenance du point d'accès AP2 indique une valeur supérieure au seuil S4.

Entre les instants T1 et T4, le terminal utilisateur s'est rapproché du point d'accès AP2. L'augmentation du débit dans le canal de communication se fait donc au fur et à mesure de ce rapprochement.

Dans le mode de réalisation décrit ci-dessus, dans le cas d'un terminal sans fil souhaitant s'associer à un point d'accès, on mesure le niveau de champ reçu par le terminal en provenance du point d'accès et s'il dépasse la valeur seuil S1, les opérations d'association sont réalisées et le canal de communication est d'abord établi au débit D1 minimal, et ce même si la valeur de champ mesuré est supérieur à une valeur seuil supérieur à S1, par exemple la valeur seuil S2.

Dans un autre mode de mise en oeuvre de l'invention, on mesure le niveau de champ reçu par le terminal en provenance du point d'accès et s'il dépasse la valeur seuil S1, les opérations d'association sont réalisées. Le canal de communication est établi immédiatement au débit théorique correspondant à la valeur seuil immédiatement inférieure au niveau de champ mesuré. Par exemple, si le niveau de champ mesuré est compris entre S2 et S3, sur le canal sera immédiatement mis en oeuvre le débit D2, sans passer d'abord par le débit D1.

Par ailleurs, le mode de réalisation décrit ci-dessus concerne la technologie IEEE 802.11. Les principes de l'invention s'appliquent bien entendu pour toute technologie sans fil utilisant la notion de zones de couverture associées respectivement à des points d'accès, par exemple les technologies IEEE 802.15. 1, IEEE 802.16, les technologies de type 2G ou 3G etc.

Le terminal considéré en référence aux figures est un terminal utilisateur. Dans d'autres modes de réalisation, il s'agit d'un terminal par exemple de type routeur embarqué dans le train.

Ainsi la présente invention propose de nouveaux principes pour l'association avec un point d'accès lors de l'entrée dans la zone de couverture correspondante. Ces principes engendrent une modification de la couche MAC. Les applications des couches supérieures du modèle OSI ne sont pas affectées.

Les principes régissant les sorties de zone ne sont pas modifiés par l'invention. Les mécanismes de l'art antérieur en sortie de zone de couverture, modulant le débit théorique du canal de communication dans le sens des débits descendants au fur et à mesure que le niveau de champ reçu par le terminal en provenance du point d'accès diminue, permettent de se déconnecter au plus bas niveau. Ces principes, associés à l'invention, permettent d'étirer les couvertures radio, et donc de diminuer les coupures provoquées par les changements de points d'accès.

L'invention permet une meilleure gestion des ressources radio à l'entrée d'une zone de couverture, notamment dans le cas d'une zone de couverture déployée le long d'une voie ferrée ou routière.

Elle permet en fait d'étendre de façon importante, sans nécessiter l'ajout de nouveaux points d'accès, la zone de couverture efficace en entrée de zone par rapport à l'art antérieur dans le cas de terminaux sans fil se déplaçant avec des vitesses importantes, en permettant une association avec le nouveau point d'accès plus tôt dans le temps, et donc à plus grande distance du nouveau point d'accès sélectionné pour l'association.

La zone appelée H indiquée ci-dessus qui ne pouvait donner lieu à une association dans l'art antérieur peut notamment être exploitée grâce à l'invention.

Le nombre de coupures dues au changement de points d'accès est donc nettement diminué, notamment dans le cas des terminaux dont la vitesse de mobilité est élevée (terminaux dans des trains à grande vitesse à 300km/h ou des voitures sur autoroute etc), ce qui rend l'exploitation d'applications temps réel telles que les visioconférences, ou de typeVoix sur IP (VoIP) beaucoup plus fluide.

## Revendications

1. Procédé de communication entre un terminal sans fil (6) et un point d'accès sans fil (AP2) d'un réseau (4), lesdits terminal et point d'accès étant configurés pour établir entre eux un canal radio de communication pour l'accès du terminal au réseau, selon au moins un premier mode correspondant à un premier débit de transmission (D1) associé à une première valeur seuil (S1) et un deuxième mode correspondant à un deuxième débit de transmission (D2) supérieur au premier débit et associé à une deuxième valeur seuil (S2), ledit procédé comprenant les étapes suivantes :
a/ mesure par le terminal d'un premier niveau de réception du signal en provenance du point d'accès ;
b/ comparaison entre ledit premier niveau mesuré et la première valeur seuil, ladite comparaison étant la première comparaison réalisée par le terminal en vue de décider de requérir l'accès au réseau via ledit point d'accès, entre une mesure de réception de signal en provenance du point d'accès et une valeur seuil associée à un débit de transmission ;
c/ si ledit premier niveau mesuré est supérieur à la première valeur seuil (S1), envoi par le terminal au point d'accès d'une requête d'accès au réseau via ledit point d'accès ;
d/ si le point d'accès répond favorablement à ladite requête, établissement d'un canal radio de communication selon le premier mode entre le terminal et le point d'accès pour l'échange de données avec le réseau.

2. Procédé selon la revendication 1, comprenant en outre les étapes suivantes après l'étape d/ :
e/ mesure par le terminal d'un deuxième niveau de réception du signal en provenance du point d'accès ;
f/ si ledit deuxième niveau mesuré est supérieur à la deuxième valeur seuil (S2) associée au deuxième débit (D2), mise en oeuvre du deuxième mode dans le canal de communication établi entre le terminal et le point d'accès.

3. Procédé selon la revendication 1 ou la revendication 2, selon lequel le terminal (6) et le point d'accès (AP2) sont configurés pour communiquer selon une pluralité de modes, chaque mode correspondant à un débit de transmission (D1, D2, D3, D4) et une valeur seuil de niveau de réception (S1, S2, S3, S4) par le terminal, le débit étant une fonction croissante du seuil de réception,
selon lequel la première valeur seuil considérée (S1) est la valeur seuil minimale parmi les valeurs seuils de la pluralité de modes.

4. Procédé selon la revendication 3, le terminal (6) et le point d'accès (AP2) étant configurés pour communiquer selon une pluralité de modes, chaque mode correspondant à un débit de transmission (D1, D2, D3, D4) et une valeur seuil de niveau de réception (S1, S2, S3, S4) par le terminal, le débit étant une fonction croissante du seuil de réception, ,
selon lequel les étapes e/ et f/ du procédé sont réitérées en considérant dans un ordre croissant des valeurs seuils successives supérieures à la deuxième valeur seuil, pour établir successivement dans le canal de communication, des débits correspondant audites valeurs seuils.

5. Procédé selon l'une quelconque des revendications précédentes, selon lequel les échanges entre le terminal (6) et le point d'accès (AP2) sont conformes à la norme 802.11, et la requête d'accès comporte une requête d'association.

6. Terminal sans fil (6) configuré pour établir, selon au moins un premier mode correspondant à un premier débit de transmission (D1) associé à une première valeur seuil (S1) et un deuxième mode correspondant à un deuxième débit de transmission (D2) supérieur au premier débit et associé à une deuxième valeur seuil (S2), un canal radio de communication avec un point d'accès sans fil (AP2) d'un réseau (4), pour l'accès du terminal audit réseau, ledit terminal comprenant :
- des moyens pour mesurer un premier niveau de réception du signal en provenance du point d'accès ;
- des moyens pour comparer ledit premier niveau mesuré et la première valeur seuil, ladite comparaison étant la première comparaison réalisée par le terminal en vue de décider de requérir l'accès au réseau via ledit point d'accès, entre une mesure de niveau de réception du signal en provenance du point d'accès et une valeur seuil associée à un débit de transmission ;
- des moyens pour, si ledit premier niveau mesuré est supérieur à la première valeur seuil, envoyer au point d'accès une requête d'accès au réseau via ledit point d'accès ;
- des moyens pour, suite à la réception d'une réponse positive du point d'accès pour l'accès au réseau, établir un canal radio de communication selon le premier mode entre le terminal et le point d'accès pour l'échange de données avec le réseau.

7. Programme d'ordinateur à installer dans un terminal sans fil (6), configuré pour établir, selon au moins un premier mode correspondant à un premier débit de transmission (D1) associé à une première valeur seuil (S1) et un deuxième mode correspondant à un deuxième débit de transmission (D2) supérieur au premier débit et associé à une deuxième valeur seuil (S2), un canal radio de communication avec un point d'accès sans fil (AP2) d'un réseau (4), pour l'accès du terminal au réseau, le programme comprenant des instructions pour mettre en oeuvre les étapes suivantes lors d'une exécution du programme par des moyens de traitement dudit terminal :
- mesure d'un premier niveau de réception du signal en provenance du point d'accès ;
- comparaison entre ledit premier niveau mesuré et la première valeur seuil, ladite comparaison étant la première comparaison réalisée par le terminal en vue de décider de requérir l'accès au réseau via ledit point d'accès, entre une mesure de niveau de réception du signal en provenance du point d'accès et une valeur seuil associée à un débit de transmission ;
- si ledit premier niveau mesuré est supérieur à la première valeur seuil, envoi au point d'accès d'une requête d'accès au réseau via ledit point d'accès ;
- si le point d'accès répond favorablement à ladite requête, établissement d'un canal radio de communication selon le premier mode entre le terminal et le point d'accès pour l'échange de données avec le réseau.

## Claims

1. Method of communication between a wireless terminal (6) and a wireless access point (AP2) of a network (4), the said terminal and access point being configured so as to establish between them a radio communication channel for access by the terminal to the network, according to at least one first mode corresponding to a first transmission throughput (D1) associated with a first threshold value (S1) and a second mode corresponding to a second transmission throughput (D2) greater than the first throughput and associated with a second threshold value (S2), the said method comprising the following steps:
a/ measurement by the terminal of a first level of reception of the signal originating from the access point;
b/ comparison between the said first measured level and the first threshold value, the said comparison being the first comparison carried out by the terminal with a view to deciding to request access to the network via the said access point, between a measurement of reception of a signal originating from the access point and a threshold value associated with a transmission throughput;
c/ if the said first measured level is greater than the first threshold value (S1), dispatching by the terminal to the access point of a request for access to the network via the said access point;
d/ if the access point responds favourably to the said request, establishment of a radio communication channel according to the first mode between the terminal and the access point for exchange of data with the network.

2. Method according to Claim 1, furthermore comprising the following steps after step d/:
e/ measurement by the terminal of a second level of reception of the signal originating from the access point;
f/ if the said second measured level is greater than the second threshold value (S2) associated with the second throughput (D2), implementation of the second mode in the communication channel established between the terminal and the access point.

3. Method according to Claim 1 or Claim 2, according to which the terminal (6) and the access point (AP2) are configured so as to communicate according to a plurality of modes, each mode corresponding to a transmission throughput (D1, D2, D3, D4) and a threshold value of level of reception (S1, S2, S3, S4) by the terminal, the throughput being an increasing function of the reception threshold,
according to which the first threshold value considered (S1) is the minimum threshold value from among the threshold values of the plurality of modes.

4. Method according to Claim 3, the terminal (6) and the access point (AP2) being configured so as to communicate according to a plurality of modes, each mode corresponding to a transmission throughput (D1, D2, D3, D4) and a threshold value of level of reception (S1, S2, S3, S4) by the terminal, the throughput being an increasing function of the reception threshold,
according to which steps e/ and f/ of the method are repeated by considering in an increasing order of the successive threshold values greater than the second threshold value, so as to successively establish in the communication channel, throughputs corresponding to the said threshold values.

5. Method according to any one of the preceding claims, according to which the exchanges between the terminal (6) and the access point (AP2) comply with the 802.11 standard, and the access request comprises an association request.

6. Wireless terminal (6) configured so as to establish, according to at least one first mode corresponding to a first transmission throughput (D1) associated with a first threshold value (S1) and a second mode corresponding to a second transmission throughput (D2) greater than the first throughput and associated with a second threshold value (S2), a radio communication channel with a wireless access point (AP2) of a network (4), for access by the terminal to the said network, the said terminal comprising:
- means for measuring a first level of reception of the signal originating from the access point;
- means for comparing the said first measured level and the first threshold value, the said comparison being the first comparison carried out by the terminal with a view to deciding to request access to the network via the said access point, between a measurement of level of reception of the signal originating from the access point and a threshold value associated with a transmission throughput;
- means for, if the said first measured level is greater than the first threshold value, dispatching to the access point a request for access to the network via the said access point;
- means for, following the reception of a positive response from the access point for access to the network, establishing a radio communication channel according to the first mode between the terminal and the access point for exchange of data with the network.

7. Computer program to be installed in a wireless terminal (6), configured so as to establish, according to at least one first mode corresponding to a first transmission throughput (D1) associated with a first threshold value (S1) and a second mode corresponding to a second transmission throughput (D2) greater than the first throughput and associated with a second threshold value (S2), a radio communication channel with a wireless access point (AP2) of a network (4), for access by the terminal to the network, the program comprising instructions for implementing the following steps during an execution of the program by processing means of the said terminal:
- measurement of a first level of reception of the signal originating from the access point;
- comparison between the said first measured level and the first threshold value, the said comparison being the first comparison carried out by the terminal with a view to deciding to request access to the network via the said access point, between a measurement of level of reception of the signal originating from the access point and a threshold value associated with a transmission throughput;
- if the said first measured level is greater than the first threshold value, dispatching to the access point of a request for access to the network via the said access point;
- if the access point responds favourably to the said request, establishment of a radio communication channel according to the first mode between the terminal and the access point for exchange of data with the network.

## Patentansprüche

1. Verfahren zur Verbindung zwischen einem drahtlosen Endgerät (6) und einem drahtlosen Zugangspunkt (AP2) eines Netzes (4), wobei das Endgerät und der Zugangspunkt konfiguriert sind, um zwischen sich einen Verbindungsfunkkanal für den Zugang des Endgeräts zum Netz gemäß mindestens einem ersten Modus, der einem einem ersten Schwellwert (S1) zugeordneten ersten Übertragungsdurchsatz (D1) entspricht, und einem zweiten Modus aufzubauen, der einem zweiten Übertragungsdurchsatz (D2) entspricht, der höher als der erste Durchsatz und einem zweiten Schwellwert (S2) zugeordnet ist, wobei das Verfahren die folgenden Schritte enthält:
a/ Messung, durch das Endgerät, eines ersten Empfangspegels des vom Zugangspunkt kommenden Signals;
b/ Vergleich zwischen dem ersten gemessenen Pegel und dem ersten Schwellwert, wobei der Vergleich der erste Vergleich ist, der von dem Endgerät im Hinblick auf die Entscheidung, den Zugang zum Netz über den Zugangspunkt anzufordern, zwischen einem Empfangsmesswert eines vom Zugangspunkt kommenden Signals und einem einem Übertragungsdurchsatz zugeordneten Schwellwert durchgeführt wird;
c/ wenn der erste gemessene Pegel höher als der erste Schwellwert (S1) ist, Senden vom Endgerät an den Zugangspunkt einer Zugangsanforderung zum Netz über den Zugangspunkt;
d/ wenn der Zugangspunkt positiv auf die Anforderung reagiert, Aufbau eines Verbindungsfunkkanals gemäß dem ersten Modus zwischen dem Endgerät und dem Zugangspunkt für den Austausch von Daten mit dem Netz.

2. Verfahren nach Anspruch 1, das außerdem die folgenden Schritte nach dem Schritt d/ enthält:
e/ Messung, durch das Endgerät, eines zweiten Empfangspegels des vom Zugangspunkt kommenden Signals;
f/ wenn der zweite gemessene Pegel höher ist als der dem zweiten Durchsatz (D2) zugeordnete zweite Schwellwert (S2), Durchführen des zweiten Modus in dem zwischen dem Endgerät und dem Zugangspunkt aufgebauten Verbindungskanal.

3. Verfahren nach Anspruch 1 oder Anspruch 2, gemäß dem das Endgerät (6) und der Zugangspunkt (AP2) konfiguriert sind, um gemäß mehreren Modi zu kommunizieren, wobei jeder Modus einem Übertragungsdurchsatz (D1, D2, D3, D4) und einem Pegelschwellwert (S1, S2, S3, S4) des Empfangs durch das Endgerät entspricht, wobei der Durchsatz eine steigende Funktion des Empfangsschwellwerts ist,
gemäß dem der erste berücksichtigte Schwellwert (S1) der Mindestschwellwert unter den Schwellwerten der mehreren Modi ist.

4. Verfahren nach Anspruch 3, wobei das Endgerät (6) und der Zugangspunkt (AP2) konfiguriert sind, um gemäß mehreren Modi zu kommunizieren, wobei jeder Modus einem Übertragungsdurchsatz (D1, D2, D3, D4) und einem Pegelschwellwert (S1, S2, S3, S4) des Empfangs durch das Endgerät entspricht, wobei der Durchsatz eine steigende Funktion des Empfangsschwellwerts ist;
gemäß dem die Schritte e/ und f/ des Verfahrens wiederholt werden, indem in einer steigenden Reihenfolge aufeinanderfolgende Schwellwerte höher als der zweite Schwellwert berücksichtigt werden, um nacheinander im Verbindungskanal den Schwellwerten entsprechende Durchsätze aufzubauen.

5. Verfahren nach einem der vorhergehenden Ansprüche, gemäß dem die Austauschvorgänge zwischen dem Endgerät (6) und dem Zugangspunkt (AP2) der Norm 802.11 entsprechen, und die Zugangsanforderung eine Zuordnungsanforderung enthält.

6. Drahtloses Endgerät (6), das konfiguriert ist, um gemäß mindestens einem ersten Modus, der einem einem ersten Schwellwert (S1) zugeordneten ersten Übertragungsdurchsatz (D1) entspricht, und einem zweiten Modus, der einem zweiten Übertragungsdurchsatz (D2) entspricht, der höher als der erste Durchsatz und einem zweiten Schwellwert (S2) zugeordnet ist, einen Verbindungsfunkkanal mit einem drahtlosen Zugangspunkt (AP2) eines Netzes (4) für den Zugang des Endgeräts zum Netz aufzubauen, wobei das Endgerät enthält:
- Einrichtungen, um einen ersten Empfangspegel des vom Zugangspunkt kommenden Signals zu messen;
- Einrichtungen, um den ersten gemessenen Pegel und den ersten Schwellwert zu vergleichen, wobei der Vergleich der erste Vergleich ist, der von dem Endgerät im Hinblick auf die Entscheidung, den Zugang zum Netz über den Zugangspunkt anzufordern, zwischen einem Empfangspegelmesswert des vom Zugangspunkt kommenden Signals und einem einem Übertragungsdurchsatz zugeordneten Schwellwert durchgeführt wird;
- Einrichtungen, um, wenn der erste gemessene Pegel höher ist als der erste Schwellwert, an den Zugangspunkt eine Zugangsanforderung zum Netz über den Zugangspunkt zu senden;
- Einrichtungen, um nach dem Empfang einer positiven Antwort vom Zugangspunkt für den Zugang zum Netz einen Verbindungsfunkkanal gemäß dem ersten Modus zwischen dem Endgerät und dem Zugangspunkt für den Austausch von Daten mit dem Netz aufzubauen.

7. Computerprogramm, das in ein drahtloses Endgerät (6) installiert werden soll und konfiguriert ist, um gemäß mindestens einem ersten Modus, der einem einem ersten Schwellwert (S1) zugeordneten ersten Übertragungsdurchsatz (D1) entspricht, und einem zweiten Modus, der einem zweiten Übertragungsdurchsatz (D2) entspricht, der höher als der erste Durchsatz und einem zweiten Schwellwert (S2) zugeordnet ist, einen Verbindungsfunkkanal mit einem drahtlosen Zugangspunkt (AP2) eines Netzes (4) für den Zugang des Endgeräts zum Netz aufzubauen, wobei das Programm Anweisungen enthält, um die folgenden Schritte bei einer Ausführung des Programms durch Verarbeitungseinrichtungen des Endgeräts anzuwenden:
- Messung eines ersten Empfangspegels des vom Zugangspunkt kommenden Signals;
- Vergleich zwischen dem ersten gemessenen Pegel und dem ersten Schwellwert, wobei der Vergleich der erste Vergleich ist, der von dem Endgerät im Hinblick auf die Entscheidung, den Zugang zum Netz über den Zugangspunkt anzufordern, zwischen einem Empfangsmesswert des vom Zugangspunkt kommenden Signals und einem einem Übertragungsdurchsatz zugeordneten Schwellwert durchgeführt wird;
- wenn der erste gemessene Pegel höher als der erste Schwellwert ist, Senden an den Zugangspunkt einer Zugangsanforderung zum Netz über den Zugangspunkt;
- wenn der Zugangspunkt positiv auf die Anforderung reagiert, Aufbau eines Verbindungsfunkkanals gemäß dem ersten Modus zwischen dem Endgerät und dem Zugangspunkt für den Austausch von Daten mit dem Netz.
